# FASCICULE DE BREVET EUROPEEN

(11) **EP 0 936 524 B1**
(45) Date de publication et mention de la délivrance du brevet: **06.08.2003**
(21) Numéro de dépôt: 99400240.0
(22) Date de dépôt: 03.02.1999
(51) Int. Cl.: G05D 23/13

(54) **Cartouche de sécurité pour mitigeur thermostatique**
Sicherheitskartusche für ein thermostatisches Mischventil
Safety cartridge for a thermostatic mixing valve

(30) Priorité: 11.02.1998 FR 9801639
(43) Date de publication de la demande: 18.08.1999
(73) Titulaire: VERNET S.A., 91291 Arpajon Cédex (FR)
(72) Inventeur: Chamot, Jean, 91290 Arpajon (FR); Mace, Christian, 91810 Vert le Grand (FR)
(74) Mandataire: Jacobson, Claude

(56) Documents cités:
- EP-A- 0 187 378
- EP-A- 0 258 129
- WO-A-97/36219
- CH-A- 474 791
- CH-A- 560 343
- FR-A- 2 656 060

## Description

L'invention concerne les mitigeurs destinés à « mitiger » ou mélanger deux courants de fluide entrant à des températures différentes, afin de constituer un unique courant de fluide sortant à une température constante réglable indépendamment des pressions et des températures respectives des deux courants de fluide entrants, et du débit du fluide sortant, dans une certaine gamme de pressions et de débits.

Elle concerne plus particulièrement la constitution de la cartouche qui équipe intérieurement de tels mitigeurs, notamment en ce qui concerne la commande du tiroir mobile de régulation qui effectue le dosage des courants de fluide entrants en fonction de la température désirée pour le fluide sortant.

En effet, dans les mitigeurs connus destinés notamment aux installations sanitaires (cabines de douche, baignoires avec ou sans douche, etc.), afin d'obtenir une régulation précise la plus stable possible, la course du tiroir de régulation excède rarement un millimètre pour une plage de réglage (classique) de 20° C à 60° C. Il en résulte qu'une variation de 1° C est engendrée par une course de 0,025 mm, ce qui permet une grande précision et une bonne fidélité du positionnement dans la zone de confort s'étendant de 35° C à 40° C (correspondant à une course de 0,125 mm). Néanmoins, la précision et la fidélité souhaitées, ainsi qu'une bonne stabilité en température ne sont obtenues qu'au prix d'un guidage rigoureux du tiroir.

De plus, afin de satisfaire aux normes de sécurité, il est nécessaire que l'interruption de l'alimentation en eau froide entraîne une interruption de l'alimentation en eau chaude, en tolérant une fuite extrêmement faible. Le tiroir doit donc alors pouvoir venir se positionner librement sur son siège.

Le guidage nécessaire pour obtenir précision, fidélité, et stabilité, qui constitue une entrave au libre positionnement du tiroir sur son siège, présente donc un inconvénient en ce qui concerne la sécurité de fonctionnement du mitigeur.

De plus, l'interruption de l'alimentation en eau chaude doit être extrêmement rapide ; la rapidité de réaction du montage dépend d'une part de celle des éléments thermostatiques mis en oeuvre dans ce type d'applications, généralement à cire, qui est améliorable, et d'autre part de celle du mélange intime des courants d'eau entrants, qui l'est également ; l'invention vise à atteindre un temps de réaction inférieur à une seconde lors de l'interruption de l'alimentation en eau froide.

Par ailleurs, il est nécessaire que la cartouche puisse être montée aisément et rapidement dans le corps du mitigeur, ce qui n'est pas toujours le cas dans les mitigeurs connus.

L'invention a donc notamment pour but de remédier aux inconvénients des mitigeurs connus et de créer un mitigeur qui satisfasse aisément aux normes de sécurité, qui soit aisé et rapide à fabriquer, à monter, et à dépanner, et qui reste d'un coût modéré.

A cet effet, l'invention concerne une cartouche thermostatique pour mitigeur, comportant une enveloppe extérieure creuse présentant une ou des lumières constituant une première entrée pour un premier courant de fluide ainsi qu'une ou des lumières constituant une deuxième entrée pour un deuxième courant de fluide et traversée par un canal interne débouchant par un orifice constituant une sortie pour un fluide mitigé résultant du mélange des courants de fluide, un élément dilatable thermostatique, deux sièges de clapet voisins chacun d'une entrée, un tiroir présentant deux clapets coopérant chacun avec l'un des sièges pour isoler ou faire communiquer chaque entrée et la sortie, fixé à une partie de l'élément thermostatique mobile en fonction de sa température, un piston dans lequel est logée une région de l'élément thermostatique qui, pour un réglage donné, reste fixe tant que le siège voisin de la première entrée n'est pas en contact avec son clapet, et un organe élastique sollicitant le piston dans le sens du rapprochement de ce clapet de son siège, cartouche caractérisée en ce que le piston présente au moins une région guidée en coulissement par des moyens de guidage libérable réversiblement, adaptés pour le guider tant que le siège voisin de la première entrée n'est pas en contact avec son clapet, supprimer le guidage quand le clapet appuie sur le siège pour autoriser alors un désalignement du piston, de l'élément thermostatique et du tiroir afin que le clapet s'applique hermétiquement contre ce siège, et rétablir le guidage quand le clapet quitte son siège.

Selon une caractéristique de l'invention, une région de l'élément thermostatique est entourée d'un organe de création de turbulences, et de préférence l'organe de création de turbulences est une bague disposée dans la région de la sortie pour le fluide mitigé, ayant un passage traversant laissant un espace de forme générale annulaire entre la surface interne de sa paroi et l'élément thermostatique, ce passage traversant présentant un évasement en direction de l'extérieur de la cartouche, des cannelures s'étendant longitudinalement, et un lamage à son extrémité tournée vers l'intérieur de la cartouche.

Selon une autre caractéristique de l'invention, les moyens de guidage libérable réversiblement comprennent une région d'extrémité du piston pénétrant dans un trou percé dans une cloison s'étendant transversalement à l'axe longitudinal de l'enveloppe, une rondelle de guidage enfilée autour de cette région d'extrémité, et un siège prévu pour la rondelle de guidage dans la cloison.

Selon encore une autre caractéristique de l'invention, l'élément thermostatique comporte un conteneur pour une masse de matière dilatable, présentant des plats, ou des dépressions et des reliefs, déterminant, en section transversale, une forme présentant au moins deux lobes.

Egalement selon une caractéristique de l'invention, le pourtour de l'enveloppe présente deux plats, et le mitigeur comporte un corps présentant une fente dans laquelle est insérée un clip présentant des branches sensiblement rectilignes s'étendant de part et d'autre de l'enveloppe en regard de ces plats, le pourtour de l'enveloppe présentant de plus une rainure permettant l'insertion d'un outil d'extraction du clip.

D'autres caractéristiques et avantages de l'invention ressortiront de la description qui va suivre de formes de réalisation de l'invention données à titre d'exemples non limitatifs, et illustrées par les dessins joints dans lesquels :
- la figure 1 est une coupe longitudinale d'une cartouche thermostatique selon l'invention,
- les figures 2A et 2B sont des sections transversales d'une partie formant conteneur de cire de deux formes de réalisation d'un élément thermostatique particulièrement bien adapté à entrer dans la constitution d'une cartouche selon l'invention,
- la figure 3 est une vue extérieure de l'élément thermostatique dont la section transversale est représentée sur la figure 2B, et
- la figure 4 montre, en section transversale au niveau de la ligne IV-IV de la figure 1, une variante par rapport à cette figure 1, du mode de montage d'une cartouche selon l'invention dans un corps de mitigeur.

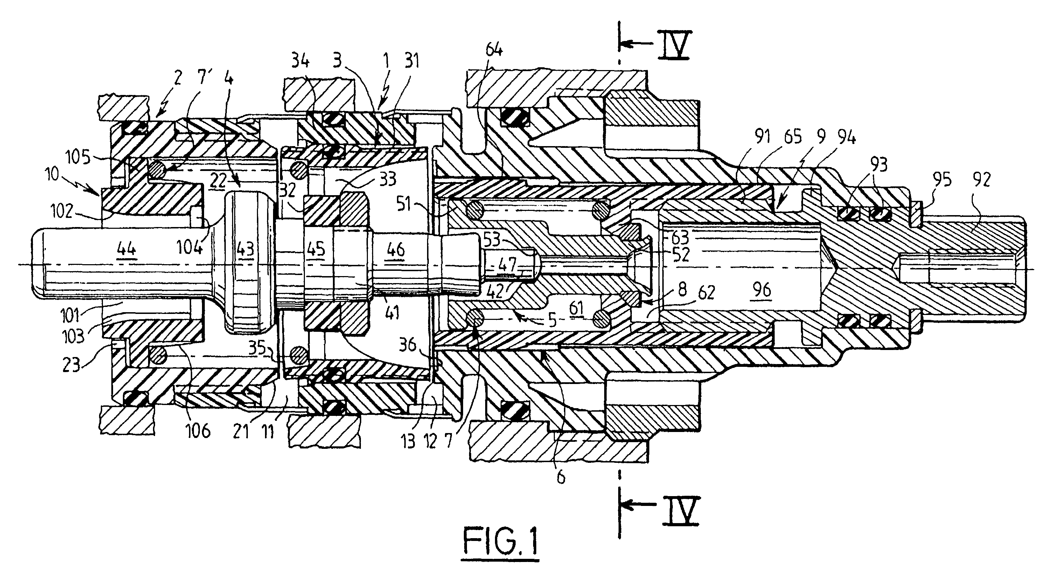

Comme de nombreuses cartouches de mitigeur connues, la cartouche de la figure 1 comporte une enveloppe extérieure creuse 1 allongée présentant extérieurement une forme générale approximativement de révolution autour d'un axe central s'étendant longitudinalement.

L'enveloppe est traversée de part en part le long de cet axe longitudinal, d'un canal interne présentant également une forme générale approximativement de révolution, centré sur cet axe.

La paroi de l'enveloppe 1 présente au moins deux lumières 11, 12 latérales traversant cette paroi radialement de part en part pour relier le volume extérieur à l'enveloppe à son canal interne, décalées longitudinalement ; ces lumières peuvent être sous la forme de deux trous circulaires, ou encore s'étendre en arc(s) de circonférence dans la paroi de l'enveloppe 1 ; l'enveloppe peut présenter par exemple deux séries de quatre lumières 11, 12 en arcs de circonférence réparties régulièrement à son pourtour, ces deux séries étant séparées dans la direction longitudinale de l'enveloppe de quelques millimètres à quelques centimètres en fonction des dimensions de la cartouche.

L'une des lumières, ou séries de lumières 11, dans la paroi de l'enveloppe, constitue une entrée d'eau chaude, et l'autre lumière ou série de lumières 12 constitue une entrée d'eau froide. Ces deux entrées peuvent être munies chacune d'un filtre par exemple sous la forme d'une bande souple de métal inoxydable présentant des perforations ici positionnée dans une gorge de l'enveloppe.

Encore comme certaines cartouches de mitigeur connues, la cartouche de la figure 1 comporte une douille 2 fixée dans le canal interne de l'enveloppe 1 coaxialement par exemple en étant vissée dans une partie d'extrémité filetée de celui-ci ; cette douille présente un passage traversant centré sur l'axe longitudinal de l'enveloppe ; son extrémité logée dans l'enveloppe est de préférence au moins légèrement en saillie dans le volume délimité par le prolongement en direction de l'intérieur du canal de l'enveloppe, du contour de la lumière ou série de lumières 11 la plus proche de l'extrémité de l'enveloppe dans laquelle elle est vissée, qui constitue l'entrée d'eau chaude ; cette extrémité de la douille voisine des lumières 11 est réalisée sous la forme d'un siège 21 annulaire pour un clapet annulaire de réglage de débit d'eau chaude, comme on le verra dans la suite. En vis-à-vis de l'extrémité de la douille 2 réalisée sous la forme d'un siège, l'enveloppe 1 ou une pièce annulaire rapportée dans cette enveloppe comporte un épaulement également réalisé sous la forme d'un siège 13 annulaire, lequel, de préférence, arase ou est légèrement en saillie dans le volume délimité par le prolongement en direction de l'intérieur du canal de l'enveloppe, du contour de l'autre lumière ou série de lumières 12, qui constitue l'entrée d'eau froide ; ce siège voisin des lumières 12 est destiné à recevoir un clapet annulaire de réglage de débit d'eau froide.

L'enveloppe 1 et la douille 2 sont montés étanches dans le corps du mitigeur au moyen de joints toriques disposés dans des gorges s'étendant dans leur périphérie.

Toujours comme dans des cartouches connues, la cartouche de la figure 1 comporte un tiroir 3 monté coulissant longitudinalement dans l'enveloppe 1 entre les deux sièges 21, 13. Ce tiroir est constitué de deux bagues 31, 32 concentriques reliées par des nervures s'étendant radialement et longitudinalement et déterminant entre elles des passages 33 s'étendant longitudinalement d'une extrémité à l'autre du tiroir. La bague extérieure 31 est ajustée dans le canal de l'enveloppe et est étanchéïfiée par rapport à lui au moyen d'un joint annulaire 34 ; sa longueur est généralement supérieure à l'écartement entre les deux lumières ou les deux séries de lumières 11, 12 ; la bague intérieure 32 est enfilée et fixée autour d'une partie, approximativement centrale, que l'on désignera dans la suite par « partie mobile » 41, d'un élément dilatable thermostatique 4 présentant une forme générale extérieure allongée approximativement de révolution, traversant le tiroir 3 de part en part et s'étendant au-delà des deux sièges 21, 13 ; à cette fin, la partie mobile 41 comporte par exemple un épaulement et une région filetée de plus petit diamètre, et la bague 32 du tiroir 3 est alors maintenue en appui contre l'épaulement par un écrou vissé autour de la région filetée. Entre l'élément thermostatique 4 et la surface interne de la douille, s'étend un espace annulaire 22 faisant communiquer les passages longitudinaux 33 du tiroir avec l'extérieur de la cartouche. Les deux extrémités de la bague extérieure 31 du tiroir sont réalisées sous la forme de clapets 35, 36 annulaires adaptés à coopérer avec le siège 21, 13 qui est en vis-à-vis, de telle sorte que les clapets puissent s'appliquer contre les sièges afin d'empêcher alors le transit du courant d'eau correspondant vers la sortie de la cartouche.

Lorsqu'un courant d'eau chaude est amené à une lumière ou une série de lumières 11 de l'enveloppe, et un courant d'eau froide à l'autre lumière ou série de lumières 12, les deux courants se mélangent plus ou moins intimement à l'intérieur du tiroir 3 et de la douille 2, autour de l'élément thermostatique 4 ; les quantités d'eau chaude et d'eau froide introduites sont déterminées par l'emplacement du tiroir 3 entre les deux sièges 21, 13, qui définit les sections des passages pour les deux courants selon que les clapets sont plus ou moins proches de leur siège respectif, et ainsi la température de l'eau dite « mitigée » sortant de la cartouche autour de la partie mobile 41 de l'élément thermostatique, par l'orifice par lequel débouche le canal interne de l'enveloppe.

Cependant, dans les cartouches connues, la partie fixe 42 (ou plus exactement, normalement fixe), de l'élément thermostatique, qui est une partie d'extrémité de l'élément 4 qui est située à l'opposé de la douille 2, au-delà des entrées d'eau chaude et d'eau froide, est maintenue guidée et centrée dans le canal de l'enveloppe. Ce sont d'ailleurs ce guidage et ce centrage qui permettent d'obtenir précision, fidélité et stabilité du réglage de la température. En revanche, comme on l'a vu, c'est également lui qui est à l'origine de l'inconvénient en matière de sécurité de fonctionnement, qui est mentionné en préambule de la demande.

Plus précisément, dans les cartouches connues, contrairement au cas de l'invention représenté sur la figure 1, la partie dite fixe 42 de l'élément thermostatique est maintenue toujours guidée et centrée dans un logement d'un piston monté coulissant le long de l'axe central de l'enveloppe et lui-même rigoureusement guidé tout le long de sa course ; d'une part ce piston est soumis à l'action d'un premier ressort hélicoïdal le rappelant en direction du siège correspondant à l'entrée d'eau chaude pour rappeler ainsi la partie mobile 41 de l'élément thermostatique et le tiroir vers leur emplacement de fermeture de cette entrée, et d'une butée de piston dont l'emplacement est modifiable en fonction de la température désirée pour le mélange sortant ; d'autre part, l'élément thermostatique 4, en général une collerette 43 de la partie mobile de celui-ci voisine de la partie sur laquelle est fixé le tiroir 3, est soumis à l'action d'un deuxième ressort moins puissant que le premier et le sollicitant en sens inverse afin de maintenir sa partie d'extrémité fixe 42 dans le logement du piston.

Ainsi, dans ces cartouches connues, lorsque le tiroir 3 étant en un emplacement choisi pour obtenir un dosage eau chaude-eau froide désiré, le débit d'eau froide diminue ou est supprimé inopinément, l'élément thermostatique 4 dont la température augmente s'allonge, la partie mobile 41 entraîne le tiroir jusqu'à son emplacement d'interruption du débit d'eau chaude, c'est-à-dire en butée contre la douille 2 (côté eau chaude), et si malgré cela, la température continue à augmenter et l'élément thermostatique continue de s'allonger, la partie mobile étant bloquée, la partie normalement fixe 42 se déplace en sens inverse de celui dans lequel se déplaçait la partie mobile en entraînant le piston à l'encontre de l'effort exercé par le premier ressort qui le sollicite en direction du côté eau chaude, ce premier ressort assurant donc la fonction de ressort de surcourse, jusqu'à ce que, la température diminuant, l'élément thermostatique revienne vers sa position initiale, sans cesser d'être guidé et centré au niveau de son extrémité normalement fixe 42.

Dans la cartouche selon l'invention représentée sur la figure 1, la partie dite fixe 42 de l'élément thermostatique est également introduite dans un logement d'un piston 5 de surcourse monté coulissant le long de l'axe central de l'enveloppe 1. En revanche, le piston 5 et la partie fixe 42 de l'élément thermostatique 4 sont agencés pour rester centrés dans le canal uniquement lors du fonctionnement courant du mitigeur afin de conserver la précision, la fidélité et la stabilité de réglage souhaitées, c'est-à-dire tant que l'élément thermostatique n'est pas allongé au-delà de ce qui est nécessaire pour que le tiroir 3 puisse venir en appui contre la douille 2 côté eau chaude, mais pour être susceptibles de se décentrer afin que le contact siège 21-clapet 35 puisse devenir parfait sans entrave si l'élément thermostatique poursuit son allongement.

Plus précisément, selon l'invention, de préférence, l'épaulement réalisé sous la forme d'un siège 13 annulaire est moulé directement dans l'enveloppe 1, et c'est une douille 6 logée dans le canal interne de l'enveloppe qui contient le piston coulissant 5 ainsi que le ressort hélicoïdal 7 le rappelant en direction de l'entrée d'eau chaude.

Egalement selon l'invention, au lieu que le piston 5 soit rappelé par ce ressort 7 vers une butée d'emplacement modifiable en fonction de la température désirée, c'est l'emplacement de la douille 6 qui est modifiable en fonction de la température désirée. A cette fin, la douille 6 est montée coulissante et guidée en translation le long du canal interne de l'enveloppe 1, et est divisée en deux chambres 61, 62 se succédant longitudinalement et qui sont séparées par une cloison 63 s'étendant transversalement à l'axe longitudinal de l'enveloppe et percée d'un trou central dont le rôle sera expliqué dans la suite.

C'est dans la chambre 61 située côté tiroir que sont logés le piston 5 et son ressort de rappel 7 ; le ressort de rappel est guidé extérieurement par la surface intérieure latérale de la chambre 61 et intérieurement à l'une de ses extrémités par la périphérie d'un bossage de la cloison 63 dans lequel est percé le trou central, tandis que son extrémité opposée est en appui contre une embase d'extrémité 51 (côté tiroir) du piston 5 elle-même guidée extérieurement par la surface intérieure latérale de la chambre 61. Le piston 5 comporte un corps s'étendant depuis l'embase 51 longitudinalement en direction de l'extrémité de la douille 6 opposée au tiroir 3 et traversant le trou central de la cloison transversale ; la région d'extrémité 52 du corps du piston opposée à l'embase est guidée en coulissement de manière libérable ou dégageable réversiblement par le fait qu'elle est entourée d'une rondelle 8 de guidage en appui contre la cloison du côté de celle-ci qui est opposé à la chambre 61 côté tiroir comme on le verra dans la suite ainsi que contre un épaulement de la surface extérieure de cette région d'extrémité ; la partie du corps du piston 5 qui est raccordée à l'embase 51 guide le ressort de rappel 7 intérieurement sur une partie de sa longueur, et la région entourée d'une rondelle 8, de plus petit diamètre, est raccordée à cette partie de guidage du ressort par un épaulement de butée contre la cloison ; le piston 5 est traversé longitudinalement par un canal central débouchant du côté de l'embase 51 par une chambre dans laquelle s'étend la partie fixe 42 de l'élément thermostatique et éventuellement une région de la partie mobile de celui-ci ; l'extrémité, bombée, par exemple hémisphérique, de cette partie fixe, est en appui contre une région du piston qui fait la transition entre cette chambre du piston et une partie rétrécie de son canal central ; le fond 53 de cette région de transition présente une forme arrondie par exemple en calotte sphérique et débouche dans la chambre avec une forme tronconique ; le pourtour circulaire de l'embase 51 présente également, en section, une forme bombée ; le deuxième ressort 7', qui vise à repousser l'élément thermostatique 4 en appui contre le fond arrondi 53 formant siège de la région de transition du canal central du piston est ici de forme générale cylindrique ; il n'agit pas directement sur l'élément thermostatique 4, mais contre un épaulement de la surface interne de la bague extérieure 31 du tiroir 3.

La chambre 62 de la douille 6 séparée de la précédente par la cloison 63 présente un filetage intérieur destiné à coopérer avec un filetage extérieur d'une tige 91 d'une vis 9 de réglage de la température désirée, dont la tête 92 est située à l'extérieur de la cartouche à l'extrémité opposée à la sortie de fluide mitigé ; cette tête 92 est cannelée de manière à pouvoir être liée en rotation à un bouton de manoeuvre (non représenté) fixé à elle par une vis centrale longitudinale ; une partie de la tige 91 de la vis de réglage 9, non filetée, raccorde la partie filetée à la tête de la vis ; cette partie comporte une région ajustée dans le canal interne de l'enveloppe 1, l'étanchéité entre la paroi de l'enveloppe et cette région étant assurée par des joints 93 sensiblement toriques ; le diamètre extérieur de cette région est légèrement supérieur à celui de la tête de la vis ; la partie non filetée de la tige de la vis comporte également, à proximité de la partie filetée, une collerette 94 de butée contre un épaulement du canal interne de l'enveloppe 1, et à proximité de la tête, à l'extérieur de l'enveloppe lorsque la collerette est en butée, une gorge pour recevoir une rondelle d'arrêt 95 telle qu'un circlips, afin d'empêcher toute translation de la vis 9. La vis de réglage 9 comporte une chambre cylindrique borgne 96 s'étendant longitudinalement coaxialement au canal interne de l'enveloppe, débouchant en vis-à-vis du piston 5 ; la rondelle de guidage 8 est fixée par sertissage autour de l'extrémité du piston 5 de surcourse et profilée pour s'appliquer contre un siège prévu pour elle dans la cloison 63 entre les deux chambres 61, 62 ; ce siège est tronconique et évasé en direction de la vis de réglage 9, ainsi que le pourtour de la région de la rondelle 8 en regard ; ainsi, la rondelle 8 peut être libérée réversiblement de son siège pour supprimer temporairement le guidage du piston.

Le guidage en translation de la douille 6 le long du canal interne de l'enveloppe 1 est assuré par le fait que les surfaces en regard de ces deux pièces sont munies de cannelures, dans leur région qui entoure la chambre 61 pour le piston 5.

Toujours selon l'invention, la région de la bague extérieure 31 du tiroir 3 qui est ajustée dans le canal interne de l'enveloppe et qui est étanchéifiée par un joint 34 approximativement torique, présente en section longitudinale une forme légèrement bombée vers l'extérieur ; il en est de même d'une région de la douille 6 proche du siège 13 voisin de l'entrée pour l'eau froide, de préférence la partie centrale du sommet des cannelures 64, et on notera que la douille 6, de relativement grande longueur, n'est ajustée dans le canal interne de l'enveloppe que sur une région 65 de faible longueur à proximité de la vis de réglage 9 ; ainsi, le tiroir 3 peut prendre une position dans laquelle son axe longitudinal est légèrement incliné par rapport à l'axe longitudinal du canal central de l'enveloppe 1 sans que son montage dans celle-ci cesse d'être étanche, et les risques de coincement de la douille 6, guidée uniquement à proximité de ses extrémités, sont minimisés.

Le fonctionnement normal de la cartouche est analogue à celui des cartouches connues, et aux diverses positions de la vis de réglage 9 dans une plage de réglage donnée correspondent autant d'emplacements d'appui du piston 5 pour l'élément thermostatique 4 ; pour les cartouches calculées de manière appropriée, ces emplacements correspondent à autant d'états de stabilité de la longueur totale de l'élément thermostatique, et ainsi à autant de combinaisons entre les états de fermeture partielle des entrées d'eau froide et d'eau chaude. En revanche, si, lors d'un état stable ou non, par suite d'une coupure inopinée de l'alimentation en eau froide, ou d'une suralimentation en eau chaude, l'élément thermostatique 4 s'allonge, le tiroir 3 se rapproche du siège 21 côté eau chaude, et son clapet correspondant 35 peut aller jusqu'à s'appuyer sur ce siège si l'élévation de la température de l'eau mélangée est importante ; si la température est telle que l'élément thermostatique 4 continue à s'allonger, la partie normalement fixe 42 de ce dernier se déplace à son tour et repousse le piston 5 dans sa douille 6 à l'encontre de l'effort exercé par son ressort hélicoïdal de rappel 7, ce qui provoque le décollement de la rondelle 8 portée par le piston, de la cloison 63 de la douille ; ainsi, le piston n'est plus guidé à son extrémité normalement fixe, et le clapet 35 du tiroir peut s'appliquer hermétiquement contre son siège 21 et empêcher tout débit, même minime d'eau chaude, et cela d'autant plus aisément que la bague extérieure 31 du tiroir 3 est bombée, que le siège 53 du piston 5 pour l'extrémité normalement fixe de l'élément thermostatique 4 est arrondi, et que le pourtour circulaire de l'embase 51 du piston est bombé, ce qui autorise un désalignement, par exemple une inclinaison, des axes longitudinaux notamment du piston 5, de l'élément thermostatique 4 et du tiroir 3 par rapport à celui de l'enveloppe 1. Lorsque l'élément thermostatique 4 se rétracte, le piston 5 est ramené vers sa position initiale par son ressort de rappel 7 et la rondelle 8 revient contre son siège dans la cloison 63, le recentrage des différentes pièces étant facilité par les formes arrondies déjà mentionnées, et par la forme tronconique de la rondelle 8 et de son siège ; le guidage du piston est alors rétabli.

Par ailleurs, afin que tant que sont amenés un filet d'eau chaude et un filet d'eau froide, le mélange soit très rapidement le plus homogène possible, la douille 2 de sortie de la cartouche est garnie d'un organe 10 de création de turbulences autour de l'élément thermostatique. Cet organe de création de turbulences est constitué par une bague insérée dans l'extrémité du passage traversant de la douille qui est la plus éloignée du tiroir 3, par laquelle l'élément thermostatique 4 dépasse à l'extérieur de l'enveloppe ; le propre passage traversant 101 de cette bague 10 présente une évasement 102 en direction de l'extérieur de l'enveloppe 1, et laisse un espace de forme générale annulaire entre la surface interne de sa paroi et l'élément thermostatique 4 ; en plus de l'évasement 102, cette surface interne présente des cannelures 103 s'étendant longitudinalement et réparties régulièrement le long de sa circonférence ; du côté de la bague qui est vers l'intérieur de l'enveloppe, la surface interne de la bague débouche par un lamage 104 circulaire à paroi périphérique lisse prolongeant le fond des cannelures.

Extérieurement, la bague présente une collerette 105 d'appui contre la paroi d'extrémité de sortie de la douille 2, laquelle présente quatre échancrures 23 réparties angulairement à 90° degrés ; vers l'extérieur de l'enveloppe, la surface extérieure de la bague 10 est cylindrique et lisse, et présente un diamètre légèrement inférieur à celui de l'orifice de la douille ; vers l'intérieur de l'enveloppe 1, sa surface extérieure présente des nervures 106 de faible hauteur allant en décroissant jusqu'à son extrémité ; ce sont ces nervures et la collerette 105 de la bague qui servent d'appui au ressort hélicoïdal 7' destiné à maintenir la partie normalement fixe de l'élément thermostatique en appui dans le piston 5, et qui est à cette fin en pression contre un épaulement de la surface intérieure de la bague extérieure du tiroir.

Grâce à la forme particulière de la surface interne de la bague de sortie 10, l'eau sortant de la cartouche et entourant l'élément thermostatique est animée de turbulences qui assurent rapidement une bonne homogénéïté du mélange.

De manière générale, il est avantageux que les entrées d'eau soient éloignées de la sortie pour que l'élément thermostatique prenne bien sa température uniformément grâce aux turbulences créées par la bague 10 favorisant le mélange eau froide-eau chaude ; cependant, il est également nécessaire de conserver la possibilité de générer un débit important, ce qui amène à adopter un compromis turbulences-débit.

Compte tenu de l'importance pour l'homogénéité du mélange, de l'emplacement de l'élément thermostatique dans le flux eau chaude-eau froide, la détermination de cet emplacement peut être optimisée par calcul informatique. Il est ainsi possible d'obtenir d'un élément thermostatique à temps de réaction très court, une correction du mélange extrêmement précise presque instantanément.

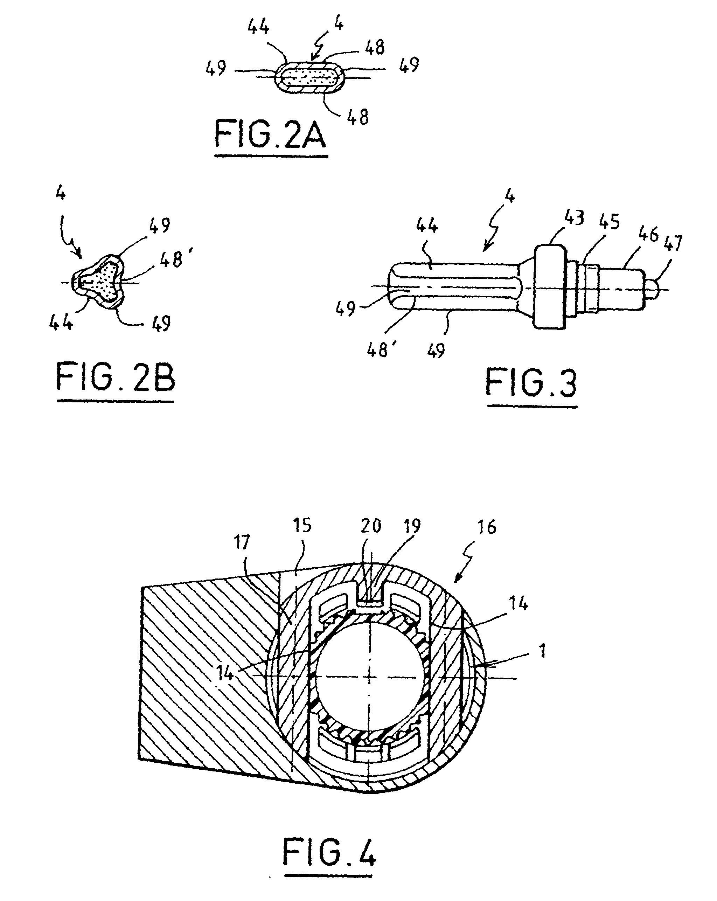

Afin que précisément le délai de réponse de l'élément thermostatique soit très court, cet élément peut, avantageusement, présenter, au lieu de la forme classique, une forme particulière telle que celles représentées sur les figures 2A, 2B et 3.

Les éléments thermostatiques classiques comportent un conteneur 44 métallique présentant une forme générale cylindrique, dont une extrémité de fond est fermée et dont l'extrémité opposée s'épanouit pour former la collerette 43, et un fourreau 45 présentant également une forme générale cylindrique avec un canal central et une embase logée dans la collerette du conteneur laquelle est sertie autour de cette embase. La partie cylindrique du conteneur 44 est remplie d'une masse de cire dilatable, et l'embase du fourreau comporte dans sa face qui est en vis-à-vis de cette masse de cire, un logement pour un diaphragme souple en forme de disque obturant le canal central du fourreau du côté du conteneur ; à l'intérieur du canal du fourreau, est logé un piston 47 assujetti aux mouvements de la région centrale du diaphragme, l'extrémité de ce piston opposée au diaphragme étant plus ou moins en saillie hors du fourreau en fonction du volume occupé par la cire, donc de la température de celle-ci ; un soufflet tubulaire 46 de protection entoure une partie du fourreau et du piston, ses extrémités étant immobilisées dans des gorges creusées au pourtour de ces deux pièces ; ce soufflet, sous la forme d'une membrane souple à déroulement, suit les mouvements du piston sans déformation élastique.

Comme le conteneur 44 présente une section transversale droite circulaire, la région centrale de la masse de cire est très éloignée de la surface latérale du conteneur, et comme la cire est un médiocre conducteur de la chaleur, les variations de température rapides de la paroi du conteneur sont transmises avec un retard sensible à ces régions éloignées, ce qui est un inconvénient en ce qui concerne la sécurité de fonctionnement de la cartouche.

Afin de remédier à cet inconvénient, de préférence, dans la cartouche selon l'invention, l'élément thermostatique présente la différence essentielle que le pourtour du conteneur 44 présente deux plats parallèles 48, ou en direction circonférentielle une succession de dépressions 48' et de reliefs, dus par exemple à une déformation par pression, ce qui détermine en section transversale droite une forme lobée présentant au moins deux lobes 49 comme sur la figure 2A, et de préférence trois lobes 49 comme sur les figures 2B et 3, ou éventuellement davantage.

Dans ces conditions, d'une part même la partie centrale de la masse de cire est proche du pourtour du conteneur 44, et d'autre part la quantité de cire, qui est un mauvais conducteur de la chaleur, est réduite, et ainsi le temps de réponse de l'élément thermostatique est notablement raccourci.

Dans ce cas, le conteneur 44 est tout d'abord réalisé avec une section droite circulaire, puis rempli partiellement de cire, et ensuite la collerette du conteneur est sertie autour de l'embase du fourreau munie de son diaphragme sous vide de telle sorte qu'il ne se trouve aucune poche d'air dans le conteneur, puis le conteneur est soumis à l'opération de déformation par pression afin de créer les plats 48 ou les dépressions 48' et les reliefs déterminant les lobes 49 de la section du conteneur.

Bien que dans la description détaillée qui précède, des éléments thermostatiques, le piston ait été décrit comme étant mobile par rapport au conteneur, au fourreau, etc., dans beaucoup de cartouches connues et dans la cartouche selon l'invention, c'est le piston qui est maintenu normalement fixe, et les autres organes qui sont mobiles dans la cartouche, et l'on comprendra que les mouvements mentionnés sont des mouvements relatifs des différentes parties de l'élément 4.

Par ailleurs, comme certaines cartouches de mitigeur connues, la cartouche selon l'invention peut être fixée dans le corps du mitigeur par vissage ; mais la fixation peut être rendue rapide et aisée en réalisant plutôt dans le pourtour de l'enveloppe 1, deux plats 14 parallèles diamétralement opposés, à proximité de l'extrémité de son canal interne où débouche la vis de réglage 9, et, en regard dans le corps du mitigeur, une fente 15 à parois approximativement planes la traversant seulement d'un côté, permettant l'insertion d'un clip plat 16 ; ce clip plat est similaire à un circlips mais présente des branches 17 sensiblement rectilignes s'étendant parallèlement de part et d'autre de l'enveloppe en regard des plats ; afin que le clip 16 ne puisse pas se dégager spontanément, les branches 17 peuvent présenter, dans la région de leur extrémité libre, des ergots en vis-à-vis ; en alternative, le dégagement du clip plat peut être empêché par la présence d'une vis (non représentée) insérée dans un trou taraudé du corps et en appui contre le clip plat ; le clip 16 peut également présenter une languette 19 s'étendant entre ses branches dans la même direction que celles-ci et équidistante d'elles, et l'enveloppe 1 présenter dans sa surface extérieure une rainure 20 longitudinale jusqu'à l'extrémité libre de l'enveloppe et équidistante des plats 14, pour le logement de cette languette 19 ; la longueur de la languette est alors légèrement inférieure à la profondeur de la rainure, de telle sorte que le clip puisse être extrait en logeant sous la languette, depuis l'extérieur du corps de mitigeur, l'extrémité d'une lame de tournevis au moyen de laquelle on soulève la languette en prenant appui dans le fond de la rainure.

Le montage de la cartouche dans le corps du mitigeur, et son démontage sont alors rapides et notablement simplifiés.

## Revendications

1. Cartouche thermostatique pour mitigeur, comportant une enveloppe extérieure creuse (1) présentant une ou des lumières (11) constituant une première entrée pour un premier courant de fluide ainsi qu'une ou des lumières (12) constituant une deuxième entrée pour un deuxième courant de fluide et traversée par un canal interne débouchant par un orifice constituant une sortie pour un fluide mitigé résultant du mélange des courants de fluide, un élément dilatable thermostatique (4), deux sièges (21, 13) de clapet voisins chacun d'une entrée, un tiroir (3) présentant deux clapets (35, 36) coopérant chacun avec l'un des sièges pour isoler ou faire communiquer chaque entrée et la sortie, fixé à une partie (41) de l'élément thermostatique mobile en fonction de sa température, un piston (5) dans lequel est logée une région de l'élément thermostatique qui, pour un réglage donné, reste fixe tant que le siège (21) voisin de la première entrée n'est pas en contact avec son clapet (35), et un organe élastique (7) sollicitant le piston, dans le sens du rapprochement de ce clapet de son siège, cartouche **caractérisée en ce que** le piston (5) présente au moins une région guidée en coulissement par des moyens (52, 8, 63) de guidage libérable réversiblement, adaptés pour le guider tant que le siège (21) voisin de la première entrée n'est pas en contact avec son clapet (35), supprimer le guidage quand le clapet appuie sur le siège pour autoriser un désalignement du piston (5), de l'élément thermostatique (4) et du tiroir (3) afin que le clapet (35) s'applique hermétiquement contre ce siège (21), et rétablir le guidage quand le clapet quitte son siège.

2. Cartouche thermostatique selon la revendication 1, **caractérisée en ce qu'**une région de l'élément thermostatique est entourée d'un organe (10) de création de turbulences.

3. Cartouche thermostatique selon la revendication 2, **caractérisée en ce que** l'organe de création de turbulences est une bague (10) disposée dans la région de la sortie pour le fluide mitigé, ayant un passage traversant (101) laissant un espace de forme générale annulaire entre la surface interne de sa paroi et l'élément thermostatique, ce passage traversant présentant un évasement (102) en direction de l'extérieur de la cartouche, des cannelures (103) s'étendant longitudinalement, et un lamage (104) à son extrémité tournée vers l'intérieur de la cartouche.

4. Cartouche thermostatique selon la revendication 1, **caractérisée en ce que** le tiroir (3) comporte deux bagues (31, 32) concentriques reliées l'une à l'autre et présente des passages (33) entre ces deux bagues, la bague extérieure (31) comporte les deux clapets (35, 36), lesquels s'étendent annulairement, les sièges (21, 13) pour les clapets s'étendent annulairement de part et d'autre du tiroir, et la bague intérieure (32) est fixée autour de l'élément thermostatique (4).

5. Cartouche thermostatique selon la revendication 1, **caractérisée en ce que** les moyens de guidage libérable réversiblement comprennent une région d'extrémité (52) du piston (5) pénétrant dans un trou percé dans une cloison (63) s'étendant transversalement à l'axe longitudinal de l'enveloppe (1), une rondelle de guidage (8) enfilée autour de cette région d'extrémité, et un siège prévu pour la rondelle de guidage dans la cloison.

6. Cartouche thermostatique selon la revendication 5, **caractérisée en ce que** le siège de la cloison (63) pour la rondelle (8) ainsi que celle-ci présentent une forme tronconique, et l'extrémité de la région (47) de l'élément thermostatique (4) qui est logée dans le piston (5) présente une forme bombée tandis que le fond (53) de la région du piston qui est en appui contre cette extrémité de l'élément thermostatique présente une forme arrondie.

7. Cartouche thermostatique selon la revendication 1, **caractérisée en ce qu'**elle comporte une douille (2) fixée dans l'enveloppe (1) et munie du siège (21) voisin de la première entrée (11), tandis que l'enveloppe comporte le siège (13) voisin de la deuxième entrée (12), ainsi qu'une autre douille (6) montée coulissante dans le canal interne de l'enveloppe, cette autre douille comportant une chambre (61) pour le piston (5) et un ressort (7) de rappel pour ce piston, et une chambre (62) séparée de celle-ci par une cloison (63) transversale et comportant un filetage intérieur destiné à coopérer avec un filetage extérieur d'une vis (9) de réglage de température.

8. Cartouche thermostatique selon la revendication 1, **caractérisée en ce que** l'élément thermostatique (4) comporte un conteneur (44) pour une masse de matière dilatable, présentant des plats (48), ou des dépressions (48') et des reliefs, déterminant, en section transversale, une forme présentant au moins deux lobes (49).

9. Cartouche thermostatique selon la revendication 1 adaptée pour être logée dans un corps de mitigeur, **caractérisée en ce que** le pourtour de l'enveloppe (1) présente deux plats (14), adaptés pour coopérer avec un organe de fixation (16) inséré dans au moins une lumière du corps de mitigeur.

10. Cartouche thermostatique selon la revendication 9, **caractérisée en ce que** le pourtour de l'enveloppe (1) présente deux plats (14), et le mitigeur comporte un corps présentant une fente dans laquelle est inséré un clip (16) présentant des branches (17) sensiblement rectilignes s'étendant de part et d'autre de l'enveloppe en regard de ces plats, le pourtour de l'enveloppe présentant de plus une rainure permettant l'insertion d'un outil d'extraction du clip.

## Patentansprüche

1. Thermostatische Patrone für Mischventil, mit einer hohlen äußeren Hülle (1), die ein oder mehrere Langlöcher (11), die einen ersten Eingang für einen ersten Fluidstrom bilden, sowie ein oder mehrere Langlöcher (12), die einen zweiten Eingang für einen zweiten Fluidstrom bilden, aufweist und von einem Innenkanal durchquert wird, der in eine Öffnung mündet, die einen Ausgang für ein aus dem Gemisch der Fluidströme sich ergebendes gemischtes Fluid bildet, einem wärmedehnbaren thermostatischen Element (4), zwei Ventilklappen-Sitzen (21, 13), die jeweils einem Eingang benachbart sind, einem Schieber (3), der zwei Ventilklappen (35, 36) aufweist, die jeweils mit einem der Sitze zusammenwirken, um den jeweiligen Eingang von dem Ausgang zu trennen oder zwischen ihnen eine Verbindung herzustellen, und jeweils an einem Teil (41) des in Abhängigkeit von seiner Temperatur beweglichen thermostatischen Elements befestigt sind, einem Kolben (5), in dem ein Bereich des thermostatischen Elements untergebracht ist, der für eine gegebene Einstellung fest bleibt, solange der dem ersten Eingang benachbarte Sitz (21) nicht mit seiner Ventilklappe (35) in Kontakt ist, und einem elastischen Organ (7), das den Kolben in Richtung der Annäherung dieser Ventilklappe an ihren Sitz vorbelastet, wobei die Patrone **dadurch gekennzeichnet ist, daß** der Kolben (5) wenigstens einen Bereich aufweist, der durch reversibel freigebbare Führungsmittel (52, 8, 63) gleitend geführt wird, die so beschaffen sind, daß sie ihn führen, solange der dem ersten Eingang benachbarte Sitz (21) nicht mit seiner Ventilklappe (35) in Kontakt ist, die Führung unterdrücken, wenn sich die Ventilklappe auf dem Sitz abstützt, um eine Fehlausrichtung des Kolbens (5), des thermostatischen Elements (4) und des Schiebers (3) zuzulassen, damit die Ventilklappe (35) hermetisch gegen diesen Sitz (21) drückt, und die Führung wiederaufnehmen, wenn die Ventilklappe ihren Sitz verläßt.

2. Thermostatische Patrone nach Anspruch 1, **dadurch gekennzeichnet, daß** ein Bereich des thermostatischen Elements von einem Turbulenzerzeugungsorgan (10) umgeben ist.

3. Thermostatische Kartusche nach Anspruch 2, **dadurch gekennzeichnet, daß** das Turbulenzerzeugungsorgan ein Ring (10) ist, der in dem Bereich des Ausgangs für das gemischte Fluid angeordnet ist und einen Durchlaß (101) besitzt, der zwischen der inneren Oberfläche seiner Wand und dem thermostatischen Element einen im allgemeinen ringförmigen Raum zurückläßt, wobei dieser Durchlaß in Richtung zur Außenseite der Patrone eine Ausweitung (102), longitudinal sich erstreckende Rillen (103) und an seinem zur Innenseite der Patrone gerichteten Ende eine Einsenkung (104) aufweist.

4. Thermostatische Patrone nach Anspruch 1, **dadurch gekennzeichnet, daß** der Schieber (3) zwei miteinander verbundene konzentrische Ringe (31, 32) umfaßt und zwischen diesen Ringen Durchlässe (33) aufweist, der äußere Ring (31) die beiden Ventilklappen (35, 36) umfaßt, die sich ringförmig erstrecken, die Sitze (21, 13) für die Ventilklappen sich beiderseits des Schiebers ringförmig erstrecken und der innere Ring (32) um das thermostatische Element (4) befestigt ist.

5. Thermostatische Patrone nach Anspruch 1, **dadurch gekennzeichnet, daß** die reversibel freigebbaren Führungsmittel einen Stimbereich (52) des Kolbens (5), der in ein Loch eindringt, das in einer Trennwand (63) ausgebildet ist, die sich quer zur Längsachse der Hülle (1) erstreckt, eine Führungsscheibe (8), die um diesen Stirnbereich angeordnet ist, und einen für die Führungsscheibe in der Trennwand vorgesehenen Sitz umfassen.

6. Thermostatische Patrone nach Anspruch 5, **dadurch gekennzeichnet, daß** der Sitz der Trennwand (63) für die Scheibe (8) sowie diese selbst eine kegelstumpfförmige Gestalt aufweisen und das Ende des Bereichs (47) des thermostatischen Elements (4), das in dem Kolben (5) untergebracht ist, eine konvexe Form aufweist, während der Boden (53) des Bereichs des Kolbens, der sich gegen dieses Ende des thermostatischen Elements abstützt, eine abgerundete Form aufweist.

7. Thermostatische Patrone nach Anspruch 1, **dadurch gekennzeichnet, daß** sie eine in der Hülle (1) befestigte Hülse (2), die mit dem Sitz (21) in der Nähe des ersten Eingangs (11) versehen ist, während die Hülle den Sitz (13) in der Nähe des zweiten Endes (12) aufweist, eine weitere Hülse (6), die in dem inneren Kanal der Hülle gleitend angebracht ist, wobei diese weitere Hülse eine Kammer (61) für den Kolben (5) sowie eine Rückstellfeder (7) für diesen Kolben aufweist, und eine Kammer (62), die von dieser durch eine transversale Trennwand (63) getrennt ist und ein Innengewinde aufweist, das dazu bestimmt ist, mit einem Außengewinde einer Temperatureinstellschraube (9) zusammenzuwirken, umfaßt.

8. Thermostatische Patrone nach Anspruch 1, **dadurch gekennzeichnet, daß** das thermostatische Element (4) einen Behälter (44) für eine Masse eines wärmedehnbaren Materials umfaßt, der Platten (48) oder Vertiefungen (48') und Reliefs aufweist, die im Querschnitt eine Form bestimmen, die wenigstens zwei Keulen (49) besitzt.

9. Thermostatische Patrone nach Anspruch 1, die so beschaffen ist, daß sie in einem Mischventilkörper untergebracht werden kann, **dadurch gekennzeichnet, daß** der Umfang der Hülle (1) zwei Platten (14) aufweist, die so beschaffen sind, daß sie mit einem in wenigstens ein Langloch des Körpers des Mischventils eingesetzten Befestigungsorgan (16) zusammenwirken.

10. Thermostatische Patrone nach Anspruch 9, **dadurch gekennzeichnet, daß** der Umfang der Hülle (1) zwei Platten (14) aufweist und der Mischer einen Körper umfaßt, der einen Schlitz aufweist, in den eine Raste (16) eingesetzt ist, die im wesentlichen geradlinige Schenkel (17) aufweist, die sich beiderseits der Hülle gegenüber diesen Platten erstrecken, wobei der Umfang der Hülle außerdem eine Rinne aufweist, die das Einschieben eines Werkzeugs zum Herausziehen der Raste ermöglicht.

## Claims

1. Thermostatic cartridge for a mixing valve comprising an outer hollow casing (1) having one or more openings (11) constituting a first inlet for a first current of fluid and one or more openings (12) constituting a second inlet for a second current of fluid and traversed by an internal channel emerging through an orifice constituting an outlet for a mixed fluid resulting from the mixing of the currents of fluid, an expandable thermostatic element (4), two valve seats (21, 13) each being adjacent to an inlet, a slide (3) having two valves (35, 36) each cooperating with one of the seats in order to isolate or to connect each inlet with the outlet, fixed to a part (41) of the thermostatic element that is mobile according to its temperature, a piston (5) in which is housed a region of the thermostatic element which, for a given adjustment, remains fixed as long as the seat (21) adjacent to the first inlet is not in contact with its valve (35), and an elastic member (7) applying force to the piston in the direction tending to bring this valve closer to its seat, this cartridge being **characterized in that** the piston (5) has at least one region guided in a sliding manner by reversibly releasable guidance means (52, 8, 63), designed to guide it as long as the seat (21) adjacent to the first inlet is not in contact with its valve (35) and to eliminate the guidance when the valve is bearing on the seat in order to allow a misalignment of the piston (5), of the thermostatic element (4) and of the slide (3) in order that the valve (35) is applied hermetically against this seat (21), and to re-establish the guidance when the valve leaves its seat.

2. Thermostatic cartridge according to Claim 1, **characterized in that** a region of the thermostatic element is surrounded by a device (10) for creating turbulence.

3. Thermostatic cartridge according to Claim 2, **characterized in that** the device for creating turbulence is a ring (10) disposed in the region of the outlet for the mixed fluid, having a traversing passage (101) leaving a space of generally annular shape between the inside surface of its wall and the thermostatic element, this traversing passage having a flare (102) flaring towards the outside of the cartridge, channels (103) extending longitudinally, and a facing (104) at its end directed towards the inside of the cartridge.

4. Thermostatic cartridge according to Claim 1, **characterized in that** the slide (3) comprises two concentric rings (31, 32) connected to each other and has passages (33) between these two rings, the outer ring (31) comprises the two valves (35, 36), which extend annularly, the seats (21, 23) for the valves extend annularly on either side of the slide, and the inner ring (32) is fixed around the thermostatic element (4).

5. Thermostatic cartridge according to Claim 1, **characterized in that** the reversibly releasable guidance means comprise an end region (52) of the piston (5) penetrating into a hole drilled in a partition (63) extending transversely with respect to the longitudinal axis of the casing (1), a guidance washer (8) slipped over this end region and a seat provided for the guidance washer in the partition.

6. Thermostatic cartridge according to Claim 5, **characterized in that** the seat in the partition (63) for the washer (8), as well as the latter, each have a truncated cone shape, and the end of the region (47) of the thermostatic element (4) which is housed in the piston (5) has a bulging shape whereas the bottom (53) of the region of the piston that is bearing against this end of the thermostatic element has a rounded shape.

7. Thermostatic cartridge according to Claim 1, **characterized in that** it comprises a socket (2) fixed in the casing (1) and provided with the seat (22) adjacent to the first inlet (11), whereas the casing comprises the seat (13) adjacent to the second inlet (12), and also another socket (6) mounted in a sliding manner in the internal channel of the casing, this other socket comprising a chamber (61) for the piston (5) and a return spring (7) for this piston, and a chamber (62) separated from the latter by a transverse partition (63) and comprising an internal threading designed to cooperate with an external threading of a temperature adjustment screw (9).

8. Thermostatic cartridge according to Claim 1, **characterized in that** the thermostatic element (4) comprises a container (44) for a mass of expandable material, having flats (48), or depressions (48') and protrusions, determining, in cross section, a shape having at least two lobes (49).

9. Thermostatic cartridge according to Claim 1, designed to be housed in the body of a mixing valve, **characterized in that** the periphery of the casing (1) has two flats (14), designed to cooperate with a fixing device (16) inserted in at least one opening of the body of the mixing valve.

10. Thermostatic cartridge according to Claim 9, **characterised in that** the periphery of the casing (1) has two flats (14), and the mixing valve comprises a body having a slot in which is inserted a clip (16) having substantially straight branches (17) extending on either side of the casing facing these flats, the periphery of the casing furthermore having a groove allowing the insertion of a tool for extracting the clip.
